# EUROPEAN PATENT APPLICATION

(11) **EP 4 717 400 A2**
(43) Date of publication of application: **01.04.2026**
(21) Application number: 25202201.7
(22) Date of filing: 15.09.2025
(51) Int. Cl.: B23P 15/02, B23H 9/10, B23H 9/14, B23K 26/382, B23K 26/40, F01D 5/18

(54) **TURBINE AIRFOIL COOLING HOLE THERMAL BARRIER COATING REMOVAL**

(30) Priority: 25.09.2024 US 202418895684
(71) Applicant: RTX Corporation, Farmington, CT 06032 (US)
(72) Inventor: Anwar-Krumeich, Omar, Plantsville, 06479 (US); Nutbrown, Calvin, Portland, 06480 (US); Collins, Leah, Essex, 06426 (US)
(74) Representative: Schmitt-Nilson Schraud Waibel Wohlfrom Patentanwälte Partnerschaft mbB

(57) **Abstract**

A cooling passage (18) forming process including providing an article comprising at least one wall (26) having an exterior surface (32); forming at least one cooling passage through the at least one wall extending through the exterior surface; coating the exterior surface of the article with a coating system (68); and removing (60) the coating system located within the cooling passage.

## Description

The present disclosure is directed to a process of forming cooling passages having both a meter portion and a diffuser portion and the removal of the unwanted coating by employing a laser technique. Particularly, a laser is used to ablate unwanted coating material from the diffuser portion to restore the cooling passage diffuser portion to appropriate dimensions.

Gas turbine engine components, such as rotor blades and vanes, are used in environments having temperatures approaching or exceeding the allowable temperature limits of the materials used in those components. Cooling fluid flows through and over the external surfaces of the components to avoid overheating of the components and its inherent structural degradation. In a typical application, cooling air flows through the blade or vane and is then ejected through passages extending through to the external surface.

To optimize the effectiveness of the cooling, the cooling passages are angled and shaped to produce a film of cooling fluid over the external surface of the component. These passages include a metering section and a diffuser section. The metering section controls the amount of cooling fluid flowing through the passage. The diffuser section reduces the velocity of the ejected fluid to encourage the fluid to form a boundary layer of cooling fluid downstream of the passage. In addition, the diffuser section maximizes the amount of external surface area covered by the film of cooling fluid.

Forming shaped cooling passages in materials such as those used in gas turbine engines presents difficulties. One popular method is to form the passages by electric-discharge machining (EDM). EDM provides an easy method to form the complex shape of the diffuser portion while also providing the accuracy required for the metering section. The EDM process involves material removal from the work piece by a series of rapidly recurring current discharges between two electrodes, separated by a dielectric liquid and subject to an electric voltage. One of the electrodes is called the tool-electrode, or simply the "tool" or "electrode," while the other is called the workpiece-electrode, or "work piece."

In accordance with the present disclosure, there is provided a cooling passage forming process comprising providing an article comprising at least one wall having an exterior surface; forming at least one cooling passage through the at least one wall extending through the exterior surface; coating the exterior surface of the article with a coating system; and removing the coating system located within the cooling passage.

Particular embodiments further may include at least one, or a plurality of, the following optional features, alone or in combination with each other:

A further embodiment of any of the foregoing embodiments may additionally and/or alternatively include the cooling passage forming process further comprising forming a meter section in the at least one cooling passage; and forming a diffuser section in the at least one cooling passage.

A further embodiment of any of the foregoing embodiments may additionally and/or alternatively include the cooling passage forming process further comprising applying a bond coat on the exterior surface.

A further embodiment of any of the foregoing embodiments may additionally and/or alternatively include the cooling passage forming process further comprising applying a thermal barrier coating on the bond coat.

A further embodiment of any of the foregoing embodiments may additionally and/or alternatively include the cooling passage forming process further comprising employing a multi-axis mount to position and rotate the article into a predetermined orientation for the at least one cooling passage formation.

A further embodiment of any of the foregoing embodiments may additionally and/or alternatively include forming the at least one cooling passage comprises employing an electric-discharge machining technique.

A further embodiment of any of the foregoing embodiments may additionally and/or alternatively include removing the coating system located within the at least one cooling passage comprises laser ablation of the coating system proximate the at least one cooling passage.

In accordance with the present disclosure, there is provided a cooling passage forming process comprising providing an article comprising at least one wall having an exterior surface; forming at least one cooling passage through the at least one wall extending through the exterior surface; forming a meter section in the at least one cooling passage; forming a diffuser section in the at least one cooling passage; coating the exterior surface of the article with a coating system; and removing the coating system located within the at least one cooling passage.

Particular embodiments further may include at least one, or a plurality of, the following optional features, alone or in combination with each other:

A further embodiment of any of the foregoing embodiments may additionally and/or alternatively include the cooling passage forming process further comprising applying a bond coat on the exterior surface.

A further embodiment of any of the foregoing embodiments may additionally and/or alternatively include the cooling passage forming process further comprising applying a thermal barrier coating on the bond coat.

A further embodiment of any of the foregoing embodiments may additionally and/or alternatively include the cooling passage forming process further comprising employing a multi-axis mount to position and rotate the article into a predetermined orientation for the at least one cooling passage formation.

A further embodiment of any of the foregoing embodiments may additionally and/or alternatively includethe cooling passage forming process further comprising removing the coating system located within the at least one cooling passage comprising laser ablation of the coating system proximate the at least one cooling passage.

A further embodiment of any of the foregoing embodiments may additionally and/or alternatively includethe cooling passage forming process further comprising positioning the article within a laser apparatus; and securing the article with a multi-axis mount, wherein the multi-axis mount is configured to move and rotate the article into a predetermined position for a laser operation.

In accordance with the present disclosure, there is provided a process for a cooling passage formation comprising providing an article comprising at least one wall having an exterior surface; forming at least one cooling passage through the at least one wall extending through the exterior surface; forming a meter section in the at least one cooling passage; forming a diffuser section in the at least one cooling passage; forming the at least one cooling passage employing an electric-discharge machining technique; coating the exterior surface of the article with a coating system; and removing the coating system located within the at least one cooling passage.

Particular embodiments further may include at least one, or a plurality of, the following optional features, alone or in combination with each other:

A further embodiment of any of the foregoing embodiments may additionally and/or alternatively include the process further comprising applying a bond coat on the exterior surface.

A further embodiment of any of the foregoing embodiments may additionally and/or alternatively include the process further comprising applying a thermal barrier coating on the bond coat.

A further embodiment of any of the foregoing embodiments may additionally and/or alternatively include the process further comprising employing a multi-axis mount to position and rotate the article into a predetermined orientation for the at least one cooling passage formation.

A further embodiment of any of the foregoing embodiments may additionally and/or alternatively include the process further comprising removing the coating system located within the at least one cooling passage comprising laser ablation of the coating system proximate the at least one cooling passage.

A further embodiment of any of the foregoing embodiments may additionally and/or alternatively include the process further comprising positioning the article within a laser apparatus; and securing the article with a multi-axis mount, wherein the multi-axis mount is configured to move and rotate the article into a predetermined position for a laser operation.

A further embodiment of any of the foregoing embodiments may additionally and/or alternatively include the process further comprising employing a vision system to locate the at least one cooling passage with the coating system prior to employing the laser.

Other details of the cooling passage forming process are set forth in the following detailed description and the accompanying drawings wherein like reference numerals depict like elements.
Fig. 1 is a perspective view of a gas turbine engine rotor blade having an airfoil portion with shaped cooling passages and a platform with shaped cooling passages.
Fig. 2 is a sectioned view of the rotor blade taken along line 2-2 of Fig. 1, showing the passage axis for each cooling passage.
Fig. 3 is a top view of the rotor blade showing the alignment of the cooling passages in the platform portion.
Fig. 4 is a cross-section view schematic representation of an exemplary cooling passage.
Fig. 5 is a schematic representation of an exemplary process.
Fig. 6 is a schematic representation of an exemplary process.
Fig. 7 is a schematic representation of an exemplary process.
Fig. 8 is an illustrative view of the rotor blade within an electric discharge machining apparatus.
Fig. 9 is an illustrative view of the rotor blade within a coating apparatus.
Fig. 10 is an illustrative view of the rotor blade within a laser drilling apparatus.
Fig. 11 is a process map.

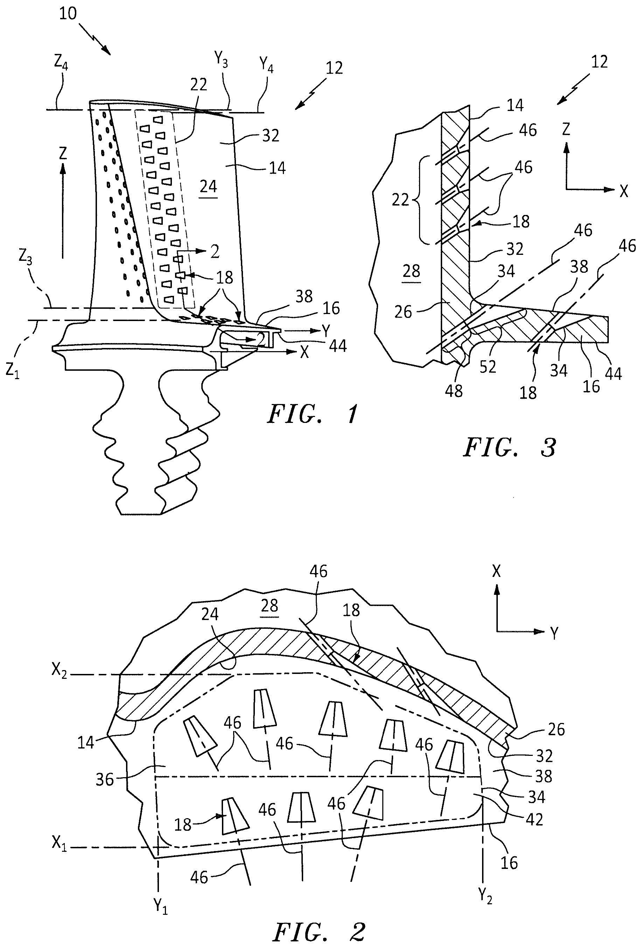

Fig. 1 illustrates an article 10 having shaped passages. As shown in Fig. 1, the article 10 can be a gas turbine engine rotor blade or a vane 12 having an airfoil 14, a platform 16, and multiple shaped cooling passages 18.

The airfoil 14 includes a plurality of shaped cooling passages 22 disposed along the pressure side 24 of the airfoil 14. As shown in Fig. 2, the plurality of cooling passages 22 extend through the wall 26 of the airfoil 14 and provide flow communication between the hollow core 28 of the airfoil 14 and the external surface 32 of the airfoil 14. Cooling fluid exiting the plurality of cooling passages 22 forms a film or buffer of cooling fluid flowing over the external surface 32 downstream of the plurality of cooling passages. This film of cooling fluid insulates the external surface 32 of the airfoil 14 from the hot gases flowing through the gas turbine engine.

The platform 16 includes another plurality of cooling passages 34 extending through the platform 16. A first group of the cooling passages 34 are adjacent to the airfoil 14. Referring also to Fig. 3, this group of cooling passages 36 extend from the hollow core 28 to the flow surface 38 of the platform 16 to provide flow communication between the core 28 and the flow surface 38 of the platform 16. A second group of cooling passages 42 are spaced laterally from the airfoil 14. This group of cooling passages 34 extend through the platform 16 to provide flow communication between the underside 44 of the platform 16 and the flow surface 38 of the platform 16. The two groups of cooling passages 36, 42 in conjunction generate a film of cooling fluid flowing over the flow surface 38 of the platform 16.

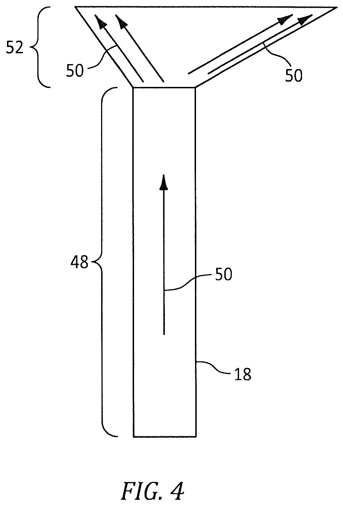

In addition to Figs. 1 to 3, referring also to Fig. 4, each cooling passage 18 is disposed about a passage axis 46 and includes a meter section 48 and a diffuser section 52. The meter section 48 is centered on the passage axis 46 and is of constant diameter. The meter section 48 controls the amount of cooling fluid 50 flowing through the cooling passage 18. The diffuser section 52 expands outwardly such that the velocity of the cooling fluid flowing through the metering section 48 decreases and the body of fluid spreads over a greater area. The shape of each particular cooling passage 18 can be tailored to meet the particular cooling requirement. In an exemplary embodiment the cooling passage 18 can be canted at a particular angle relative to the flow surface over which it is directing cooling fluid. The specific orientation of each of the cooling passages 18, whether in the airfoil 14 or the platform 16, contributes to the capabilities of the cooling passages 18 to generate the necessary film of cooling fluid over the flow surfaces of the blade 12.

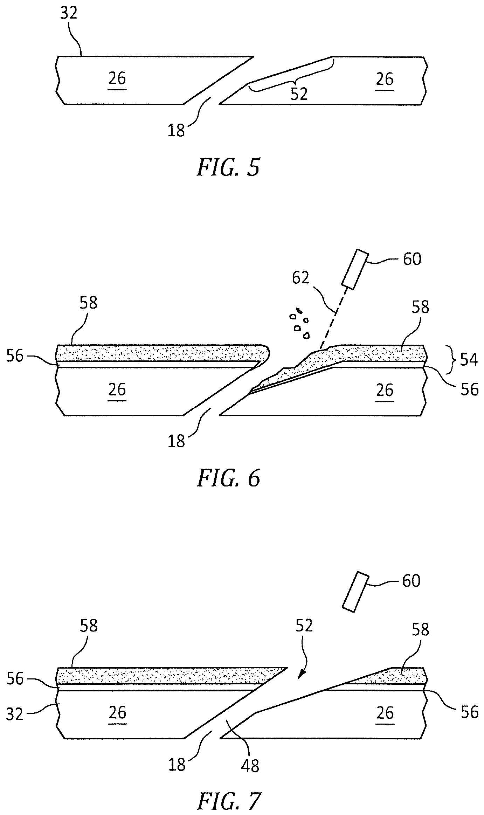

Referring also to Figs. 5 through 7, showing the evolution of the cooling passages 18 during construction. The external surface 32 can be coated with a coating system or simply coating 54. The coating system 54 can include a bond coat 56 and a thermal barrier coating layer (TBC) 58. It is contemplated that additional layers, such as environmental barrier layer or substitute layers can be included in the coating system 54. The coating system 54 can be applied by various techniques available, such as plasma spraying. During the application of the coating system 54 it has been discovered that portions of the passage 18 becomes contaminated with some of the coating system 54 material, as seen in Fig. 6. The diffuser section 52 can be seen with coating material 56, 58 located within a portion of the diffuser section 52. It has been determined that the function of the diffuser section 52 can be degraded due to the unwanted coating material 56, 58 being located within the diffuser section 52.

Forming the shaped cooling passages 18 requires a forming operation for the meter section 48 and the diffusor section 52 of each cooling passage 18 and an additional step for removing the coating system material 54 to create the finished version of the meter section 48 and the diffusor section 52 of each cooling passage 18.

For illustrative purposes, the process includes an EDM operation and a laser ablating operation shown and described as the methods for forming the meter section 48 and the diffusor section 52, respectively. EDM is a method for making passages having three-dimensionally complex shapes, such as the meter section 48 and the diffusor section 52.

An energy device, such as a laser 60 can be employed to remove the unwanted portions of coating system 54 material from the passage 18, particularly from the diffuser section 52. The laser 60 can emit a laser beam 62 that possesses enough energy to precisely remove the coating system material 54 while maintaining the proper shape and dimensions of the passage 18, proximate the diffuser section 52, as seen in Fig. 7.

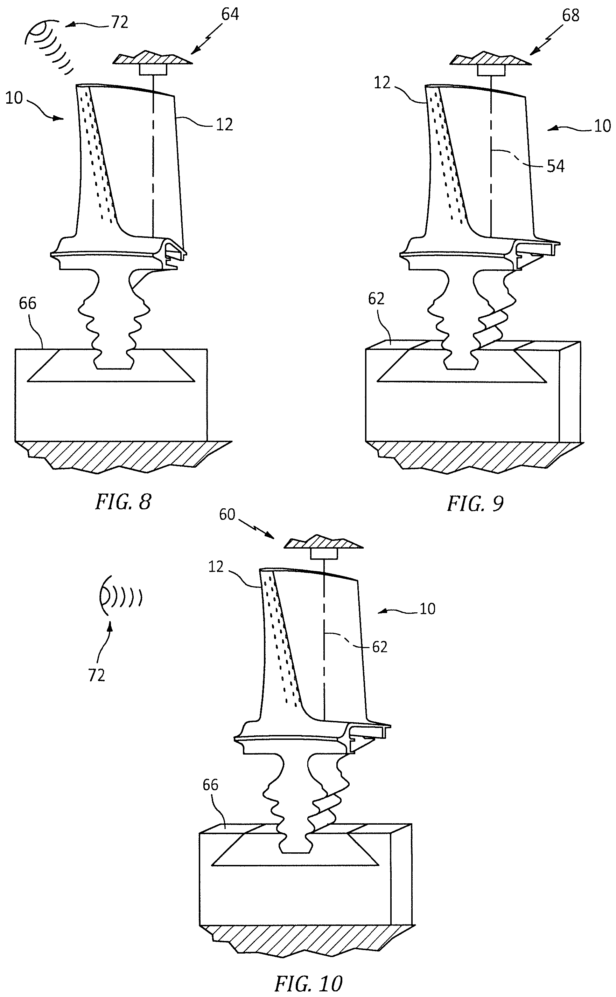

Referring also to Fig. 8, Fig. 9 and Fig. 10, processing the article 10, such as the blade/vane 12 is shown in separate process devices. The blade/vane 12 can have passages 18 formed employing an EDM apparatus 64. The blade/vane 12 can be placed within the EDM apparatus 64. A multi-axis mount 66 can be used to position and rotate the blade/vane 12 into the proper orientation for the EDM passage 18 formation. The EDM apparatus 64 has its own internal coordinate system and each cooling passage 18 has a spatial position P2 within that coordinate system. Both the meter sections 48 and diffusor sections 52 are formed at the specified locations, again within the tolerances of the EDM apparatus 64.

The blade/vane 12 can be removed from the EDM apparatus 64 and placed within a coating apparatus 68, Fig. 9. The coating system 54 can be applied to the rotor blade 12, such as by spray processes. The bond coat 56 can be applied to the surface 32 for example. The thermal barrier coating 58 can be applied on top of the bond coat 56.

After completion of the coating system 54 application, the blade/vane 12 can be positioned within the laser apparatus 60 and secured onto the multi-axis mount 66, Fig. 10. The mount 66 permits the blade/vane 12 to be moved and rotated into the proper position for the laser operation. The location of each of the cooling passages 18 is programmed into the laser apparatus 60 in accordance with the device's internal coordinate system, such that, each cooling passage 18 has its own position P1. The mount 66 and blade/vane 12 are repositioned by moving or rotating the mount 66 such that each cooling passage 18 is cleaned, by removing the unwanted coating system material 54 in the proper position, within the tolerances of the device.

A vision system 72 can be employed in the process to locate the cooling passage 18, 34 with the unwanted coating system material 54 prior to employing the laser 60 so that the precisely designed laser 60 can be more efficiently utilized. The coordinates stored in the CNC program bring the laser 60 to the general area of the cooling passage 18, and then the vision system 72 is used to fine tune the position. The vision system 72 allows for the proper location of the meter 48 and diffuser 52 of the cooling passage 18 and then for location of the laser beam 62.

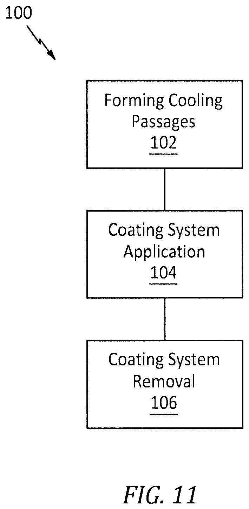

Referring also to Fig. 11 a process map for the disclosed process. The process 100 includes the providing an article 10 for formation of cooling passages 18. The next step 102 includes forming the cooling passages 18 in the article 10. The cooling passages 18 can include a meter section 48 and a diffuser section 52. The next step 104 includes coating the external surface 32 of the article 10. The coating material 54 can be applied by various techniques. The coating 54 can include a bond coat 56 and a thermal barrier coating 58. The coating material 54 can be applied into the cooling passage 18. The coating material 54 can be applied within the diffuser section 52. The next step 106 can include removal of the unwanted coating material 54 from portions of the cooling passage 18. A laser 60 can be employed to ablate the coating material 54 from the diffuser section 52. The laser beam 62 can remove the coating material 54 and avoid removing portions of the diffuser section 52. The as finished dimensions of the cooling passages 18 can be maintained post coating system 54 application.

A technical advantage of the disclosed cooling passage forming process includes opening the flow capacity of cooling passages that have been impacted by coating material application.

Another technical advantage of the disclosed cooling passage forming process includes precisely removing coating system materials from cooling passage sections.

Another technical advantage of the disclosed cooling passage forming process includes allowing diffuser sections to realize the full potential for cooling film effectiveness.

There has been provided a cooling passage forming process. While the cooling passage forming process has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A cooling passage forming process comprising:
providing an article comprising at least one wall having an exterior surface;
forming at least one cooling passage through the at least one wall extending through the exterior surface;
coating the exterior surface of the article with a coating system; and
removing the coating system located within the cooling passage.

2. The cooling passage forming process according to claim 1, further comprising:
forming a meter section in the at least one cooling passage; and
forming a diffuser section in the at least one cooling passage.

3. The cooling passage forming process according to claim 1 or 2, further comprising:
applying a bond coat on the exterior surface.

4. The cooling passage forming process according to claim 3, further comprising:
applying a thermal barrier coating on the bond coat.

5. The cooling passage forming process according to any of claims 1 to 4, further comprising:
employing a multi-axis mount to position and rotate the article into a predetermined orientation for the at least one cooling passage formation.

6. The cooling passage forming process according to any of claims 1 to 5, wherein forming the at least one cooling passage comprises employing an electric-discharge machining technique.

7. The cooling passage forming process according to any of claims 1 to 6, wherein removing the coating system located within the at least one cooling passage comprises laser ablation of the coating system proximate the at least one cooling passage.

8. The cooling passage forming process according to any of claims 1 to 7, further comprising:
positioning the article within a laser apparatus; and
securing the article with a multi-axis mount, wherein the multi-axis mount is configured to move and rotate the article into a predetermined position for a laser operation.

9. The cooling passage forming process according to claim 8, comprising:
forming the at least one cooling passage employing an electric-discharge machining technique.

10. The cooling passage forming process according to claim 8 or 9, further comprising:
employing a vision system to locate the at least one cooling passage with the coating system prior to employing the laser.
